# EUROPÄISCHE PATENTSCHRIFT

(11) **EP 0 781 177 B1**
(45) Veröffentlichungstag und Bekanntmachung des Hinweises auf die Patenterteilung: **14.06.2000**
(21) Anmeldenummer: 95928933.1
(22) Anmeldetag: 05.09.1995
(51) Int. Cl.: B21D 28/26

(54) **VERFAHREN UND EINRICHTUNG ZUM STANZEN VON LÖCHERN IN FLACHE WERKSTÜCKE**
PROCESS AND DEVICE FOR STAMPING HOLES IN FLAT WORKPIECES
PROCEDE ET DISPOSITIF PERMETTANT DE POINCONNER DES TROUS DANS DES PIECES PLATES

(30) Priorität: 07.09.1994 CH 273194
(43) Veröffentlichungstag der Anmeldung: 02.07.1997
(73) Patentinhaber: Hänggi, Eugen, 4500 Solothurn (CH)
(72) Erfinder: Hänggi, Eugen, 4500 Solothurn (CH)
(74) Vertreter: Faltas Mikhail, William
(86) Internationale Anmeldenummer: CH9500193
(87) Internationale Veröffentlichungsnummer: WO9607493

(56) Entgegenhaltungen:
- DE-A- 3 920 701
- DE-B- 1 055 919
- FR-E- 64 221
- US-A- 3 706 249
- US-A- 4 619 448
- H. Mauri, "Der Vorrichtungsbau", I Teil, 1957, Seiten 42 und 43, Abb. 183-184

## Beschreibung

Die Erfindung betrifft ein Verfahren zur Serienfertigung von Lochscheiben für Mehrlochdüsen zur Kraftstoffeinspritzung, wobei Löcher nacheinander durch schrittweise Winkelverstellung eines Blechwerkstücks in bezug auf einen Stanzstempel gestanzt werden, sowie eine Vorrichtung zur Durchführung des Verfahrens.

Automatische Stanzmaschinen mit einem Drehtisch zum Stanzen von Löchern nacheinander mit einem Stanzstempel durch die schrittweise Winkelverstellung des Werkstücks sind in US-A-3 706 249 und FR-A-1 032 960 beschrieben.

In US-A-4 619 448 ist eine automatische Stanzmaschine beschrieben, die vier verschiebbare Anschläge zum Einspannen eines viereckigen Werkstücks auf einem Arbeitstisch mit rechtwinkligen Führungsnuten aufweist, wobei zwei Motoren zum Verschieben der Anschläge in den Führungsnuten vorgesehen sind, um damit das Werkstück in bezug auf den Stanzstempel zu verschieben.

Lochscheiben für Mehrlochdüsen erfordern identische Lochanordnungen in jeder Scheibe, wobei unterschiedlich geneigte Spritzlöcher im allgemeinen erforderlich sind und wobei geringfügige Abweichungen der Spritzlöcher beim Stanzen der Lochscheiben die Einspritzung von Kraftstoff beeinträchtigen können.

Die Serienfertigung von Lochscheiben für Mehrlochdüsen zum Einsatz in Einspritzmotoren ist deshalb insofern besonders problematisch, als eine äussert hohe Reproduzierbarkeit der Präzision der Lochbeschaffenheit und Position jedes der in geringem Abstand voneinander gestanzten Spritzlöcher garantiert werden muss, um den einwandfreien Betrieb von Einspritzmotoren in grossen Serien sicherzustellen.

Die Aufgabe der Erfindung besteht darin, ein Verfahren und eine Vorrichtung zur Serienfertigung von Lochscheiben für Mehrlochdüsen der eingangs genannten Art zu schaffen, das mit relativ einfachen technischen Mitteln den oben erwähnten Problemen weitgehend Rechnung trägt und insbesondere die Serienfertigung von Lochscheiben mit unterschiedlichen Lochanordnungen mit ausreichender Reproduzierbarkeit der Präzision der Beschaffenheit und Position jedes gestanzten Lochs gewährleistet und damit Mehrlochdüsen für den optimalen Betrieb von Einspritzmotoren garantiert.

Das Verfahren und die Einrichtung zur Lösung dieser Aufgabe gemäss der Erfindung sind in den Patentansprüchen 1 und 3 definiert.

Das Verfahren gemäss der Erfindung besteht im wesentlichen darin, dass Werkstücke mit eine vieleckigen Kontur zunächst vorgefertigt werden, diese Kontur derart gestaltet und der gewünschten Anordnung von Löchern im Werkstück so angepasst wird, dass verschiedene vorbestimmte Winkelstellungen des Werkstücks auf einer feststehenden Stanzmatrize definiert sind, wenn verschiedene vorbestimmte Seiten des Werkstücks an entsprechenden seitlichen Anschlägen auf der Stanzmatrize anliegen.

Geneigte Löcher werden erfindungsgemäss gestanzt, indem man das Werkstück auf einer feststehenden Stanzmatrize mit einer entsprechend geneigten Auflagefläche positioniert, wobei das Werkstück zum Stanzen der Löcher nacheinander in verschiedenen vorbestimmten Winkelstellungen auf der geneigten Auflagefläche der Stanzmatrize zwischen seitlichen Anschlägen eindeutig positioniert wird.

Das Werkstück wird nach dem Stanzen eines Lochs von der Stanzmatrize entfernt, verdreht und in einer weiteren Winkelstellung zwischen den genannten Anschlägen auf der geneigten Auflagefläche der Stanzmatrize erneut positioniert, um ein weiteres Loch zu stanzen, wobei dieser Schritt wiederholt wird bis alle geneigten Löcher der gewünschten Lochanordnung im Werkstück gestanzt worden sind.

Die Kontur des vieleckig gestalteten Werkstücks erfüllt die Funktion einer Schablone, die auf besonders einfache Weise mit den seitlichen Anschlägen zusammenwirkt, um das Werkstück erfindungsgemäss in vorbestimmten Winkelstellungen auf der feststehenden Stanzmatrize zu positionieren und damit die Lage jedes Lochs im Werkstück genau festzulegen.

Die seitlichen Anschläge werden derart auf der feststehenden Stanzmatrize angeordnet und dem vieleckigen Werkstück angepasst, dass sie das Positionieren des Werkstücks in verschiedenen vorbestimmten Winkelstellungen zum Stanzen von Löchern nacheinander an entsprechenden vorbestimmten Stellen im Werkstück gestatten.

Man kann ferner paarweise angeordnete, parallel verlaufende Löcher stanzen, indem das vieleckige Werkstück so gestaltet wird, dass jeweils zwei gegenüberliegende Seiten des Werkstücks mit unterschiedlich tiefen Aussparungen versehen sind, wobei die genannten Anschläge in bestimmten Winkelstellungen des Werkstücks mit diesen Aussparungen zusammenwirken.

Solche paarweise angeordneten, parallelen Löcher können auf einfache Weise durch seitliches Verschieben des vieleckigen Werkstücks mit Hilfe verstellbarer oder auswechselbarer Anschläge schräg zur Werkstückoberfläche gestanzt werden.

Dank der erfindungsgemäss vorgesehenen Gestaltung des vorgefertigten Werkstücks und der vorbestimmten Winkelstellungen in bezug auf die seitlichen Anschläge werden die Koordinaten der jeweils gewünschten Löcher auf sehr einfache Weise genau im Werkstück festgelegt und damit die maximale Reproduzierbarkeit beim Stanzen sicherstellt.

Damit kann man erfindungsgemäss mit einem einzigen Stanzstempel verschiedene symmetrische Lochanordnungen auf sehr einfache Weise durch die schrittweise Winkelverstellung des Werkstücks erzeugen.

Ausserdem kann das Werkstück nachträglich bearbeitet werden, um damit eine Lochscheibe mit dem gewünschten Durchmesser zu erzeugen.

Die Erfindung wird anhand von Ausführungsbeispielen erläutert, die wie folgt in der Zeichnung schematisch dargestellt sind.

Fig. 1 zeigt im Grundriss ein vieleckiges Werkstück zum Stanzen von sechs Löchern nach einem Ausführungsbeispiel.

Fig. 1a bis 1f zeigen das Werkstück nach Fig. 1 in sechs Winkelstellungen zum Stanzen einzelner Löcher nacheinander.

Fig. 2 zeigt einen vertikalen Schnitt einer Einrichtung zur Durchführung des erfindungsgemässen Verfahrens, wobei das Werkstück im Schnitt entlang der Linie II-II in Fig. 1 dargestellt ist.

Fig. 3a bis 3d zeigen im Grundriss ein viereckiges Werkstück zum Stanzen von vier Löchern nach einem anderen Ausführungsbeispiel, das in vier Winkelstellungen zum Stanzen der einzelnen Löcher nacheinander dargestellt ist.

Fig. 4a bis 4d zeigen eine Variante des Ausführungsbeispiels nach Fig. 3a bis 3d.

Fig. 5a bis 5d zeigen im Grundriss ein achteckiges Werkstück zum Stanzen von vier paarweise parallelen Löchern nach einem weiteren Ausführungsbeispiel.

Gleichartige Elemente haben dieselben Bezugszeichen in den Figuren der Zeichnung.

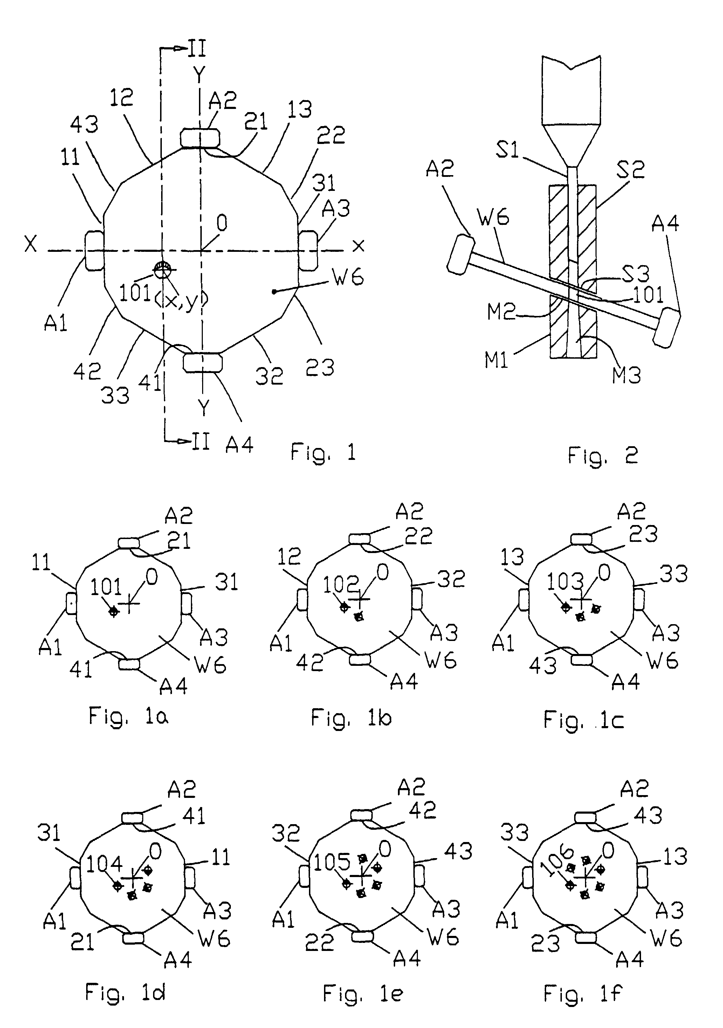

Das Werkstück W6 in Fig. 1 besteht aus einem zwölfkantigen Blech mit sechs langen Kanten 11, 12, 13, 31, 32, 33 und sechs kurzen Kanten 21, 22, 23, 41, 42, 43, die in einem Kreis eingeschrieben und abwechselnd am Umfang des Werkstucks W6 in der folgenden Reihenfolge angeordnet sind: 11-43-12-21-13-22-31-23-32-41-33-42.

Fig. 1 zeigt ferner vier seitliche Anschläge A1 bis A4, wobei die Anschläge A1, A3 und A2, A4 in Kontakt mit den Kanten 11, 31 bzw. 21, 41 des Werkstücks stehen und symmetrisch in rechtwinkligen Mittellinien X-X und Y-Y durch den Mittelpunkt 0 des Werkstücks W6 angeordnet sind.

Die Anschläge A1 bis A4 definieren damit die Winkelstellung des Werkstücks W6 sowie ein Koordinatensystem X-Y durch den Mittelpunkt 0 des Werkstücks W6, wobei die in Fig. 1 angezeigten Koordinaten x, y die Lage des zu stanzenden Lochs 101 festlegen.

Fig. 2 zeigt schematisch im senkrechten Schnitt nach II-II in Fig. 1 eine Einrichtung zum Stanzen von schrägstehenden Löchern gemäss der Erfindung. Diese Einrichtung umfasst einen Stanzstempel S1, eine vertikal bewegliche Stempelführung S2 mit einer geneigten Unterseite S3, eine Stanzmatrize Ml mit einer geneigten Auflagefläche M2 für das Werkstück W6 und einem vertikalen Durchgang M3 für den Stanzstempel S1 in der Matrize Ml sowie die im Zusammenhang mit Fig. 1 erwähnten Anschläge A2 und A4.

Die Auflagefläche M2 der Stanzmatrize und die Unterseite S3 der Stempelführung S2 sind ferner in einem vorbestimmten Winkel zur Horizontalebene geneigt angeordnet, so dass das Werkstück W6 im selben Winkel geneigt ist und das gestanzte Loch 101 dementsprechend schräg im Werkstück W6 verläuft.

Die Stempelführung S2 ist in Fig. 2 in Ihrer unteren Stellung gezeigt, in welcher das Werkstück W6 zwischen ihrer Unterseite S3 und der Auflagefläche M2 schrägstehend angeordnet ist, wobei der Stanzstempel S1 in einer Zwischenstellung steht.

Die vertikal bewegliche Stempelführung S2 ist ferner mit einer herkömmlichen, nicht gezeigten Verstellvorrichtung verbunden, um die Stempelführung S2 einerseits in ihre in Fig. 2 gezeigte untere Arbeitsstellung zum Stanzen und andererseits in ihre obere Ruhestellung zu bringen, bei welcher das Werkstück eingesetzt und entfernt werden kann.

Das Werkstück wird somit in der beschrieben Einrichtung nach Fig. 2 einerseits zum Stanzen eines Lochs zwischen den Anschlägen 1 bis 4 positioniert und zwischen der Auflagefläche M2 und die Unterseite S3 der Stempelführung S2 festgehalten. Die Stempelführung S2 wird andererseits in ihre obere Ruhestellung gebracht, damit das Werkstück zum Stanzen eingesetzt werden kann, um es danach zu entfernen, in die nächste Winkelstellung zu verdrehen und zum Stanzen des folgenden Lochs wieder einzusetzen.

Die beschriebene Einrichtung nach Fig. 2 dient zum Stanzen von schrägstehenden Löchern in einem vorbestimmten Winkel zum Werkstück, wobei die Auflagefläche M2 der Matrize M1 dementsprechend geneigt angeordnet ist.

Das beschriebene Werkstück W6 in Fig. 1 dient zum Stanzen von sechs Löchern, die gleichmässig um den Mittelpunkt 0 des Werkstücks W6 auf einem Kreis verteilt und deren Mittelpunkte mit 101 bis 106 bezeichnet sind. Das Stanzen dieser sechs Löcher wird weiter im Zusammenhang mit Fig. 1 a bis Fig. 1f beschrieben.

Die Lage des Stanzstempels S1 in bezug auf das Werkstück und damit der Mittelpunkt des jeweils zu stanzenden Lochs 101 bis 106 wird durch die Anschläge A1 bis A4 bei den in Fig. 1 dargestellten Koordinaten x, y des Lochs 101 im Koordinatensystem X-Y der Mittellinien X-X und Y-Y durch den Mittelpunkt 0 des Werkstücks W4 definiert.

Die sechs Löcher 101 bis 106 werden auf diese Weise nacheinander gestanzt und symmetrisch angeordnet, wie aus Fig. 1a bis 1f hervorgeht.

Es ist aus der obigen Beschreibung ersichtlich, dass dank der erfindungsgemäss vorgesehenen Kombination des vieleckigen Werkstücks W6 mit den seitlichen Anschlägen A1 bis A4 und mit der Auflagefläche M2 der Stanzmatrize, das Werkstück jeweils in der erforderlichen Winkelstellung zum Stanzen eines bestimmten Lochs exakt positioniert wird, wodurch die Koordinaten x, y jedes Lochs eindeutig festgelegt und mit der Achse des Stanzstempels genau ausgerichtet werden, so dass identische Löcher nacheinander auf einfache Weise lediglich durch die schrittweise Änderung der Winkelstellung des Werkstücks gestanzt werden.

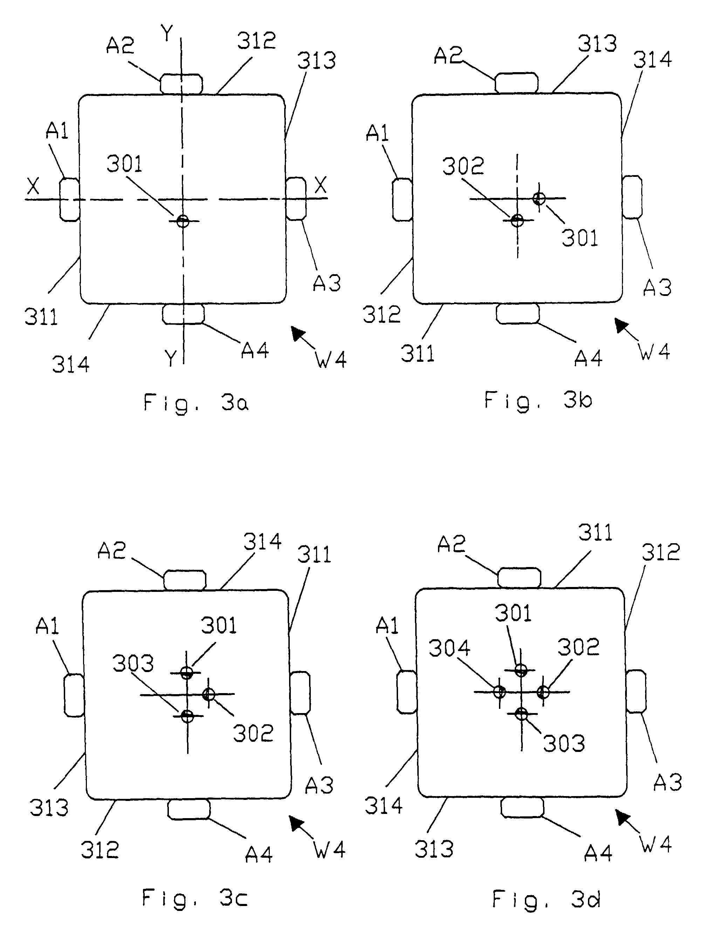

Beim weiteren Ausführungsbeispiel nach Fig. 3a bis 3d dient ein quadratisches Werkstück W4 zum Stanzen von vier symmetrisch angeordneten Löchern 301 bis 304, die auf ähnliche Weise wie im Zusammenhang mit Fig. 1, la bis ld und 2 bereits beschrieben nacheinander gestanzt werden.

Die nachfolgende Beschreibung dieser Anordnung wird deshalb vereinfacht, um unnötige Wiederholungen zu vermeiden, wobei man sich im folgenden auf die Unterschiede zur vorangehenden Beschreibung beschränkt.

Das in Fig. 3a bis 3d dargestellte Werkstück W4 besteht aus einem quadratischen Blech mit vier Kanten 311, 321, 331, 341, wobei die gegenüberliegenden Anschläge A1, A3 und A2, A4 im gleichen Abstand zueinander stehen, ebenfalls symmetrisch in den rechtwinkligen Mittellinien X-X und Y-Y des Werkstücks W4 angeordnet sind und das Werkstück auf ähnliche Weise positionieren.

In der ersten Winkelstellung zum Stanzen des Lochs 301 stehen die vier Kanten 311, 321, 331, 341 des Werkstücks in Kontakt mit den vier Anschlägen A1, A2, A3, A4, wobei das Werkstück jeweils um 90° nach Links verdreht wird, um die vier Löcher 301 bis 304 nacheinander zu stanzen, wie aus Fig. 3a bis 3d hervorgeht.

Die beschriebene Einrichtung in Fig. 2 kann auf gleiche Weise zum Stanzen der vier Löcher 301 bis 304 im Werkstück W4 dienen, das man zum Stanzen zwischen den Anschlägen A1 bis A4 auf der Auflagefläche M2 positioniert und jeweils um 90° nach links verdreht, wobei diese Löcher nacheinander gestanzt und symmetrisch verteilt werden, wie aus Fig. 3a bis 3d hervorgeht.

Das quadratische Werkstück W4 kann auch gegebenenfalls auf ähnliche Weise zum Stanzen von zwei Löchern dienen, wobei man das Werkstück W4 nach dem Stanzen des ersten Lochs 301 um 180° verdreht, um das gegenüberliegende zweite Loch 303 zu stanzen.

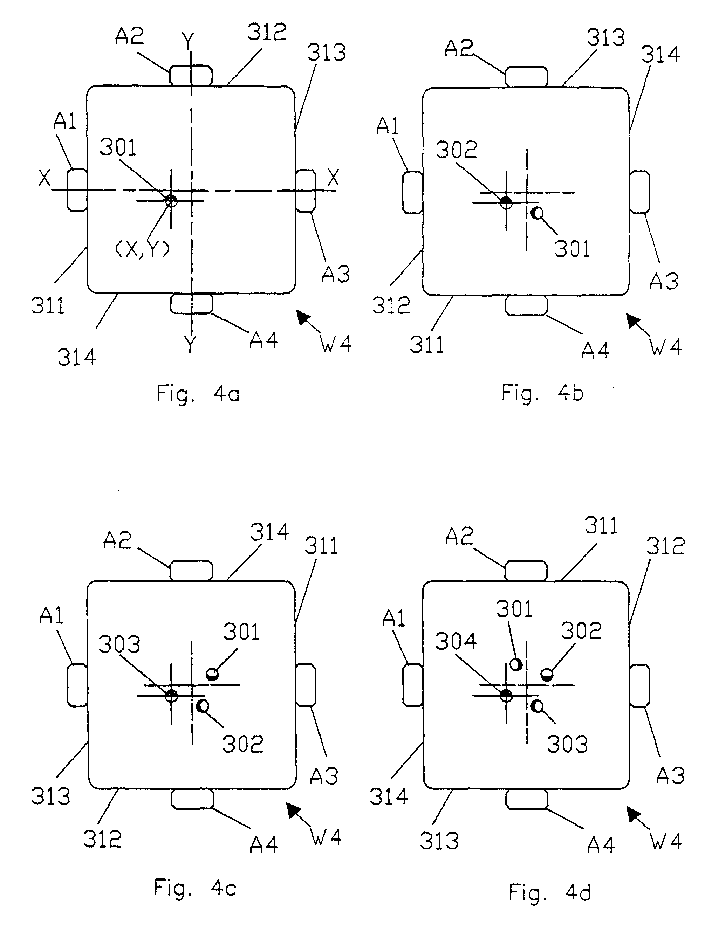

Die in Fig. 4a bis 4d dargestellte Variante entspricht im wesentlichen dem beschriebenen Ausführungsbeispiel nach Fig. 3a bis 3d, wobei die vier Löcher 401 bis 404 in diesem Fall die Koordinaten x, y im Koordinatensystem X-Y aufweisen.

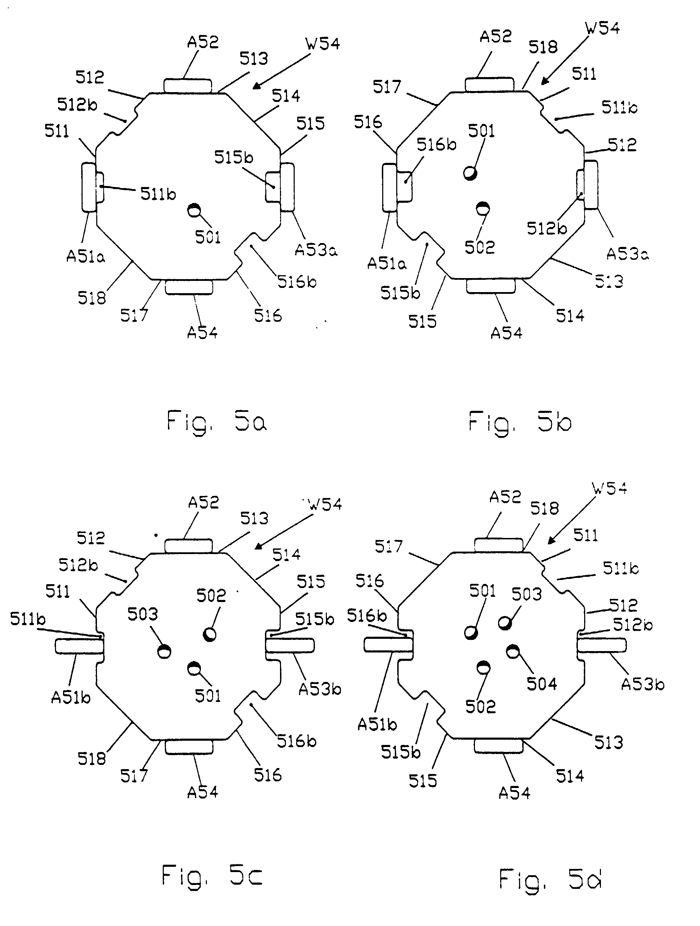

Fig. 5a bis 5d zeigen ein achtkantiges Werkstück W54 in vier Winkelstellungen zum Stanzen von vier paarweise angeordneten, parallel verlaufenden Löchern 501, 503 bzw. 502, 504 gemäss einem weiteren Ausführungsbeispiel der Erfindung.

Das Werkstück W54 weist acht Kanten 511 bis 518 mit rechteckigen Aussparungen 511b, 512b, 515b, 516b auf und wird durch seitliche Anschläge A51a, A52, A53a, A54 bzw. A51b, A52, A53b, A54 in den Winkelstellungen in Fig. 5a, 5b bzw. 5c, 5d positioniert, um damit die Löcher 501 bis 504 nacheinander mit einem einzigen Stanzstempel zu stanzen.

Die einander gegenüberliegenden Kanten 511, 515 bzw. 512, 516 des Werkstücks W54 sind mit rechteckigen Aussparungen ungleicher Tiefe 511b, 515b bzw. 512b, 516b versehen, die wahlweise mit den entsprechenden Anschlägen A51a, A53a bzw. A51b, A53b gemäss Fig. 5a bis 5d zusammenwirken.

Fig. 5a zeigt das Werkstück W54 in der ersten Winkelstellung zum Stanzen des Lochs 501, wobei die Anschläge A51a, A52, A53a, A54 zu diesem Zweck den Kanten 511, 513, 515 bzw. 517 des Werkstücks W54 wie folgt zugeordnet sind: A51a/511; A52/513; A53a/515; A54/517.

Fig. 5b zeigt das Werkstück W54 in der zweiten Winkelstellung zum Stanzen des Lochs 502, wobei die Anschläge A51a, A52, A53a, A54 zu diesem Zweck den Kanten 516, 518, 512 bzw. 514 des Werkstücks W54 wie folgt zugeordnet sind: A51a/516; A52/518; A53a/512; A54/514.

Fig. 5c zeigt das Werkstück W54 in der dritten Winkelstellung zum Stanzen des Lochs 503, wobei die Anschläge A51b, A53b zu diesem Zweck den rechteckigen Aussparungen 511b bzw. 515b und die Anschläge A52, A54 den Kanten 513 bzw. 517 des Werkstücks W54 wie folgt zugeordnet sind: A51b/511b; A52/513; A53b/515b; A54/517.

Fig. 5d zeigt das Werkstück W54 in der vierten Winkelstellung zum Stanzen des Lochs 504, wobei die Anschläge A51b, A53 zu diesem Zweck den rechteckigen Aussparungen 516b bzw. 512b und die Anschläge A52, A54 bzw. den Kanten 518 bzw. 514 des Werkstücks W54 wie folgt zugeordnet sind: A51b/516b; A52/518; A53b/512b; A54/514.

Die Anschläge A52 und A54 dienen damit zum Positionieren des Werkstücks W54 in den Winkelstellungen nach Fig. 5a bis 5d. Das Werkstück W54 wird in den zwei Winkelstellungen nach Fig. 5a und 5b zum Stanzen der Löcher 501 bzw. 502 durch die Anschläge A51a, A53a und in den zwei Winkelstellungen nach Fig. 5c und 5d zum Stanzen der Löcher 503 bzw. 504 durch die Anschläge A51b, A53b positioniert.

Die Anschläge A51a, A53a werden dabei nach dem Stanzen der ersten zwei Löcher 501, 502 durch die Anschläge A51b, A53b ersetzt, um die nächsten zwei Löcher 503, 504 zu stanzen.

Die beschriebene vieleckige Gestaltung des Werkstücks W54 mit den ungleich tiefen Aussparungen 511b, 515b bzw. 512b, 516b in Kombination mit den Anschlägen A51a, A53a bzw. A51b, A53b ergibt nebst der unterschiedlichen Winkeleinstellungen in Fig. 5a bis 5d eine lineare Verschiebung der Locher 503 bzw. 504 in bezug auf die Löcher 501 bzw. 502. Auf diese Weise wird das Loch 503 parallel zum Loch 501 und das Loch 504 parallel zum Loch 502 gestanzt, wie man insbesondere aus Fig. 5d ersehen kann.

Diese Erfindung ergibt eine spezielle Kombination von Vorteilen, die wie folgt erläutert werden können.
(a) Dank der erfindungsgemäss vorgesehenen schrittweisen Winkelverstellung des Werkstücks wird es nun möglich, die gewünschten Löcher mit demselben Stempel nacheinander zu stanzen und gleichmässig zu verteilen.
(b) Schrägstehende Löcher können in einem bestimmten Winkel zum Werkstück auf ähnliche Weise genau gestanzt werden, wobei die Auflagefläche für das Werkstück auf der Stanzmatrize entsprechend geneigt angeordnet wird.
(c) Vieleckige Werkstücke werden jeweils durch entsprechende seitliche Anschläge in vorbestimmten Winkelstellungen auf der feststehenden Stanzmatrize genau positioniert, so dass die Lage des jeweils zu stanzenden Lochs auf der Oberseite des Werkstücks genau festgelegt wird.
(d) Verschiedene Kombinationen von vieleckigen Werkstücken mit geeigneten Anschlägen ermöglichen das Stanzen von unterschiedlichen symmetrischen Lochanordnungen mit derselben Stanzeinrichtung.
(e) Durch die Kombination des vieleckigen Werkstücks mit entsprechenden Anschlägen können bei jeder Winkeleinstellung des Werkstücks die Koordinaten des jeweils zu stanzenden Lochs im Werkstück auf besonders einfache Weise genau definiert werden.

Die Erfindung eignet sich insbesondere für die Serienfertigung von Spritzlochscheiben von Einspritzventilen, wobei die oben erwähnten Vorteile eine spezielle Bedeutung für die Reproduzierbarkeit bei der Produktion solcher Lochscheiben in grossen Serien aufweisen.

Das erfindungsgemässe Stanzverfahren wird gegenwärtig für die Massenherstellung von Lochscheiben für Einspritzventile mit einer Produktion von etwa 10 Millionen Lochscheiben pro Jahr eingesetzt, wobei insbesondere die folgenden Schritte durchgeführt werden:
1. Werkstoffüberprüfung des Stanzblechs für die Lochscheiben.
2. Vorbereitung und Markierung von mehrkantigen Werkstücken.
3. Stanzen und Überprüfung der Spritzlöcher
4. Endbearbeitung und Überprüfung der fertigen Spritzlochscheiben.

## Patentansprüche

1. Verfahren für die Serienfertigung von Lochscheiben für Mehrlochdüsen zur Kraftstoffeinspritzung, bei dem Löcher (101-106; 301-304; 501-504) nacheinander durch schrittweise Winkelverstellung eines Blechwerkstücks (W6; W4; W54) in bezug auf einen Stanzstempel (S1) gestanzt werden,
(a) wobei man Werkstücke (W6; W4; W54) mit einer vieleckigen Kontur vorfertigt, die man derart gestaltet, dass vorbestimmte Winkelstellungen des Werkstücks (W6; W4; W54) auf einer feststehenden Stanzmatrize (M1) definiert sind, wenn unterschiedliche Seiten des Werkstücks (W6; W4; W54) an seitlichen Anschlägen (A1-A4; A51-A54) auf der Stanzmatrize (M1) anliegen, und damit die gewünschte Anordnung der Löcher im Werkstück bestimmen,
(b) wobei man jedes Loch (101-106; 301-304; 501-504) in jedes Werkstück (W6; W4; W54) stanzt, indem man das Werkstück (W6; W4; W54) in einer vorbestimmten Winkelstellung zwischen seitlichen Anschlägen (A1-A4; A51-A54) auf der feststehenden Stanzmatrize (M1) mit einer geneigten Auflagefläche (M2) eindeutig positioniert.
(c) wobei man geneigte Löcher (101-106; 301-304; 501-504) nacheinander stanzt, indem man das Werkstück (W6; W4; W54) in unterschiedlichen Winkelstellungen auf der geneigten Auflagefläche (M2) der Stanzmatrize (M1) positioniert,
(d) wobei man die schrittweise Winkelverstellung des Werkstücks (W6; W4; W54) zum Stanzen der Löcher (101-106; 301-304; 501-504) nacheinander dadurch bewirkt, dass man das Werkstück (W6; W4; W54) nach dem Stanzen eines Lochs nach Schritt (b) von der Stanzmatrize (M1) entfernt, verdreht und in einer anderen Winkelstellung zwischen den Anschlägen (A1-A4; A51-A54) erneut positioniert, um ein weiteres Loch zu stanzen, und wobei man diesen Schritt wiederholt, bis alle geneigten Löcher (101-106; 301-304; 501-504) der gewünschten Lochanordnung in das Werkstück (W6; W4; W54) gestanzt worden sind.

2. Verfahren nach Anspruch 1, dadurch gekennzeichnet, dass man das vieleckige Werkstück (W54) so gestaltet, dass jeweils zwei gegenüberliegende Seiten (512, 516; 511, 515) des Werkstücks (W54) mit ungleich tiefen Aussparungen (512b, 516b; 511b, 515b) verschen sind, wobei die genannten Anschläge (A51-A54) in bestimmten Winkelstellungen des Werkstücks mit diesen Aussparungen (512b, 516b; 511b, 515b) zusammenwirken, um damit paarweise parallele Löcher (501-504) zu stanzen.

3. Einrichtung zum Stanzen einer Mehrzahl von Löchern (101-106; 301-304; 501-504) in ein Blechwerkstück (W6; W4; W54) mit einer vieleckigen Kontur für die Serienfertigung von Lochscheiben für Mehrlochdüsen nach Anspruch 1, wobei die Einrichtung einen einzigen Stanzstempel (S1) und eine feststehende Stanzmatrize (M1) mit einem Durchgang (M3) für den Stanzstempel (S1) und einer geneigten Auflagefläche (M2) mit einer Gruppe von ortsfesten Anschlägen (A1-A4; A51-A54) aufweist, die der vieleckigen Kontur des Werkstücks (W6; W4; W54) angepasst und in bezug auf den Stanzstempel (S1) versetzt ist, um das Werkstück (W6; W4; W54) in unterschiedlichen, vorbestimmten Winkelstellungen zwischen den Anschlägen (A1-A4; A51-A54) eindeutig zu positionieren und damit eine Mehrzahl von geneigten Löchern (101-106; 301-304; 501-504) nacheinander zu stanzen, deren Position im Werkstück (W6; W4; W54) von der Kontur des Werkstücks (W6; W4; W54) bestimmt wird.

## Claims

1. A process for the series production of orifice disks for multihole fuel-injection nozzles, wherein holes (101-106; 301-304; 501-504) are punched successively by stepwise angular displacement of a sheet-metal workpiece (W6; W4; W54) in relation to a punch (S1),
(a) wherein workpieces (W6; W4; W54) arc prefabricated with a polygonal contour which is formed so that predetermined angular positions of the workpiece (W6; W4; W54) are defined on a stationary punch die (M1) when different sides of the workpiece (W6; W4; W54) lie against lateral stops (A1-A4; A51-A54) on the punch die (M1) and thereby determine the desired arrangement of the holes in the workpiece,
(b) wherein each hole (101-106; 301-304; 501-504) is punched in each workpiece (W6; W4; W54) by exactly positioning the workpiece (W6; W4; W54) in a predetermined angular position between lateral stops (A1-A4; A51-A54) on the stationary punch die (M1) with an inclined bearing surface (M2),
(c) wherein oblique holes (101-106; 301-304; 501-504) are punched successively by positioning the workpiece (W6; W4; W54) in different angular positions on the inclined bearing surface (M2) of the punch die (M1).
(d) wherein the stepwise angular displacement of the workpiece (W6; W4; W54) for successively punching the holes (101-106; 301-304; 501-504) is effected by removing the workpiece (W6; W4; W54) from the punch die (M1) after punching a hole according to step (b), rotating and positioning it once more in another angular position between the stops (A1-A4; A51-A54), in order to punch a further hole, and wherein this step is repeated until all the oblique holes (101-106; 301-304; 501-504) of the desired hole arrangement have been punched in the workpiece (W6; W4; W54).

2. The process according to claim 1, characterized in that the polygonal workpiecc (W54) is formed so as to provide in each case two opposite sides (512, 516; 511, 515) of the workpiece (W54) with recesses of unequal depth (512b, 516b; 511b, 515b), wherein said stops (A51-A54) interact with these recesses (512b, 516b; 511b, 515b) in given angular positions of the workpiece in order to thereby punch parallel holes (501-504) in pairs.

3. A device for punching a plurality of holes (101-106; 301-304; 501-504) in a workpiece of sheet metal (W6; W4; W54) with a polygonal contour for the series production of orifice disks for multihole fuel-injection nozzles according to claim 1, wherein the device comprises a single punch (S I ) and a stationary punch die (Ml) with a passage (M3) for the punch (S1) and an inclined bearing surface (M2) with a group of fixed stops (A1-A4; A51-A54) which is adapted to the polygonal contour of the workpiece (W6;W4; W54) and is offset in relation to the punch (Sl), in order to definitely position the workpiece (W6; W4; W54) in different predetermined angular positions between the stops (A1-A4; A51-A54) and to thereby successively punch a plurality of oblique holes (101-106; 301-304; 501-504) whose position in the workpiece (W6; W4; W54) is determined by the contour of the workpiccc (W6; W4; W54).

## Revendications

1. Procédé pour la fabrication en série de plaques à orifices pour des injecteurs à orifices multiples pour l'injection de carburants, selon lequel on poinçonne des trous (101-106; 301-304; 501-504) successivement par déplacement angulaire pas-à-pas d'une pièce en tôle (W6; W4; W54) par rapport à un poinçon (S1),
(a) selon lequel des pièces (W6; W4; W54) sont préfabriquées avec un contour polygonal que est formé de manière que des positions angulaires prédéterminées de la pièce (W6; W4; W54) sur une matrice de perforation fixe (M1) soient définies lorsque des cotés différents de la pièce (W6; W4; W54) se trouvent contre des butées latérales (A1-A4; A51-A54) sur la matrice de perforation (M1) et déterminent de ce fait la disposition désirée des trous dans la pièce,
(b) selon lequel on poinçonne chaque trou (101-106; 301-304; 501-504) dans chaque pièce (W6; W4; W54) en positionnant la pièce (W6; W4; W54) exactement dans une position angulaire prédéterminée entre des butées latérales (A1-A4; A51-A54) sur la matrice de perforation fixe (M1) avec une surface d'appui inclinée (M2),
(c) selon lequel on poinçonne des trous inclinés (101-106; 301-304; 501-504) successivement en positionnant la pièce (W6; W4; W54) dans des positions angulaires différentes sur la surface d'appui inclinée (M2) de la matrice de perforation (M1),
(d) selon lequel on effectue le déplacement angulaire pas-à-pas de la pièce (W6; W4; W54), afin de poinçonner successivement les trous (101-106; 301-304; 501-504), en éloignant la pièce (W6; W4; W54) de la matrice de perforation (M1) après le poinçonnage d'un trou selon l'opération (b), en la tournant et en la positionnant à nouveau dans une autre position angulaire entre les butées (A1-A4; A51-A54) afin de poinçonner un trou suivant, et selon lequel on répète cette opération jusqu'à ce que tous les trous inclinés (101-106; 301-304; 501-504) de la disposition de trous désirée soient poinçonnés dans la pièce (W6; W4; W54).

2. Procédé selon la revendication 1, caractérisé en ce que l'on construit la pièce polygonale (W54) de manière que deux cotés opposés (512, 516; 511, 515) de la pièce (W54) soient pourvus chaque fois d'encoches de profondeur inégale (512b, 516b; 511b, 515b), lesdites butées (A51-A54) coopérant avec ces cavités (512b, 516b; 511b, 515b) dans des positions angulaires données de la pièce, afin de poinçonner des trous parallèles par paires (501-504).

3. Dispositif pour poinçonner une pluralité de trous (101-106; 301-304; 501-504) dans une pièce en tôle (W6; W4; W54) avec un contour polygonal pour la fabrication en série de plaques à orifices pour des injecteurs à orifices multiples selon la revendication 1, selon lequel le dispositif présente un seul poinçon (S1) et une matrice de perforation fixe (M1) avec un passage (M3) pour le poinçon (S1) et une surface d'appui inclinée (M2) avec un groupe de butées fixes (A1-A4; A51-A54), qui est adapté au contour polygonal de la pièce (W6; W4; W54) et est décalé par rapport au poinçon (S1) afin de positionner la pièce (W6; W4; W54) exactement dans différentes positions angulaires prédéterminées entre les butées (A1-A4; A51-A54) et de ce fait de poinçonner successivement une pluralité de trous inclinés (101-106; 301-304; 501-504) dont la position dans la pièce (W6; W4; W54) est déterminée par le contour de la pièce (W6; W4; W54).
